# EUROPÄISCHE PATENTSCHRIFT

(11) **EP 0 865 915 B1**
(45) Veröffentlichungstag und Bekanntmachung des Hinweises auf die Patenterteilung: **01.03.2000**
(21) Anmeldenummer: 97810700.1
(22) Anmeldetag: 23.09.1997
(51) Int. Cl.: B32B 29/00, B65D 81/34

(54) **Rezyklierbares und biologisch abbaubares, hitze- und tiefkühlbeständiges Verpackungslaminat, insbesondere für die Herstellung von Verpackungen für Lebensmittel**
Recyclable and biodegradable, heat- and cold-resistant packaging laminate, preferably for food packaging
Stratifié d'emballage recyclable, biodégradable, résistant à la chaleur et aux basses températures utilisable en particulier pour la fabrication d'emballages d'aliments

(30) Priorität: 11.03.1997 EP 97810136
(43) Veröffentlichungstag der Anmeldung: 23.09.1998
(73) Patentinhaber: SA-Patent AG, 7002 Chur (CH)
(72) Erfinder: Anderlini Michelangelo, 7002 Chur (CH)
(74) Vertreter: Riederer, Conrad A., Dr.

(56) Entgegenhaltungen:
- EP-A- 0 494 077
- EP-A- 0 542 143
- EP-A- 0 543 764
- WO-A-92/22425
- WO-A-96/20832
- DE-A- 4 109 983
- US-A- 2 157 392
- US-A- 3 973 045
- US-A- 4 797 010
- US-A- 5 363 982
- DATABASE WPI Section Ch, Week 9526 Derwent Publications Ltd., London, GB; Class A92, AN 95-196650 XP002038594 & JP 07 112 757 A (SAN-EI KAGAKU KOGYO KK) , 2.Mai 1995

## Beschreibung

Die vorliegende Erfindung betrifft ein rezyklierbares und biologisch abbaubares, fett-, hitze- und tiefkühlbeständiges Laminat mit zwei oder mehreren Schichten, insbesondere zur Aufbewahrung, zum Tiefkühlen, zum Aufwärmen und/oder zum Backen von Lebensmitteln.

Ein generelles Problem bei den heutzutage verwendeten Verpackungen oder Behältern zur Aufbewahrung von Lebensmitteln ist deren Entsorgung. In den allermeisten Fällen sind die Verpackungen ein Verbund aus normalem Papier oder Karton und einer oder mehreren Schichten aus Kunststoff oder Metall. Da eine nachträgliche Trennung der Schichten praktisch unmöglich ist, müssen solche Verpackungen oder Behälter zur Entsorgung in einer Kehrichtverbrennungsanlage verbrannt werden. Bei einer Ablagerung der Behälter auf Mülldeponien verrottet zwar das Papier oder der Karton, übrig bleibt aber das Kunststoff- bzw. Metallaminat.

Die EP-A-0 244 179 beschreibt z.B. einen Papierbehälter mit einer Papierschicht, welche beidseitig mit einer hitzebeständigen Schicht aus einem Epoxy-Acryl-Kunststoff versehen ist. Der Vorteil dieses Behälters ist seine gute Hitzebeständigkeit. Durch die Zugabe eines Pigments zur hitzebeständigen Kunststoffschicht kann eine Verfärbung des Papiers bei grosser Hitze optisch unsichtbar gemacht werden. Nachteilig am Behälter ist jedoch, dass eine Trennung des Papier-Kunststoffverbunds nach dem Gebrauch praktisch nicht mehr möglich ist oder zu aufwendig wäre. Der Behälter eignet sich also nicht für eine Rezyklierung. Ausserdem ist er auch nicht biologisch abbaubar.

Die EP-A-0 245 005 beschreibt einen Kartonbehälter mit einem verbesserten Flammwiderstand, welcher aussen, d.h. auf der lebensmittelabgewandten Seite, mit einem Papier, welches eine nicht-brennbare Beschichtung besitzt, beschichtet ist. Der Karton und die Papierschicht sind mittels eines Klebstoffes, typischerweise Polyvinylacetat, miteinander verbunden. Auf der Innenseite ist der Karton mit einem lebensmittelkonformen Kunststoff, z.B. Polyethylenterephthalat, beschichtet. Dieser Behälter ist in der Herstellung relativ aufwendig und auch nicht rezyklierbar.

Die EP-A-0 542 143 beschreibt ein Verpackungsmaterial aus mehrlagigen Verbundstoffen, die vollständig kompostierfähig sind. Das Verpackungsmaterial besteht aus einer Grundschicht aus einem üblichen Papier oder Karton mit hohem Recyclinganteil, welches ein- oder beidseitig über eine Leimschicht mit einem lebensmittelzulässigen Papier beschichtet ist. Die dem Produkt zugewandte Seite besteht aus einer Laminatschicht aus intensiv gemahlener Cellulose, welcher wasserlösliche Polysaccharide zugegeben sind und die in einem Superkalander verdichtet wurde. Die aus dem Verbundmaterial hergestellten Behälter sollen auch als Backbehälter eingesetzt werden können und sich auch für die Aufbewahrung von fetthaltigen Speisen eignen. Aufgrund der hohen Satinage wird ein hinreichender Antihafteffekt erzielt, sodass offensichtlich auf spezielle Beschichtungen verzichtet werden kann. Ein Nachteil des beschriebenen Behälters ist allerdings, dass dieser nicht ausgesprochen fett-, hitze- und tiefkühlbeständig ist.

Die EP-A-0 494 077 offenbart eine Verpackung zum Aufbewahren und Warmhalten von zubereiteten Speisen aus 100% abbau- und rezyklierbarem Material. Die Verpackung besitzt eine äussere Papiergrundschicht, auf deren Innenseite mittels eines Adhäsivs eine weitgehend luft- wasser- und fettundurchlässige Barriereschicht aus transparentem Papier angeordnet ist. Auf der genannten Barriereschicht ist eine äussere Metallschicht mit einem geringen Emissionsvermögen aufgebracht. Behälter mit Metallbeschichtungen haben jedoch den Nachteil, dass sie sich nicht zum Aufwärmen von Speisen in Mikrowellenherden eignen.

Verpackungen oder Behälter, die für das Aufbewahren, Tiefgefrieren und Aufwärmen von Lebensmitteln geeignet sind, haben in der Regel den Nachteil, dass sie nicht universell, d.h. zum Tiefkühlen, Aufbewahren, Backen, Braten usw., eingesetzt werden können. So können z.B. Behälter, die eine Aluminiumbeschichtung aufweisen, nicht in Mikrowellenöfen sondern nur in konventionellen elektrischen Backöfen erwärmt, respektive darin aufgenommene Lebensmittel gebacken oder gebraten werden. Behälter ohne Metallbeschichtungen wiederum sind zwar mikrowellenkompatibel, sind aber häufig nicht in einem solchen Ausmass hitzebeständig, dass sie in einem elektrischen Ofen zum Backen oder Braten, was eine mehrere Stunden in Anspruch nehmen kann, eingesetzt werden könnten. Dazu kommt meist das bereits eingangs angesprochene Problem der biologischen Abbaubarkeit. Gerade Einmalgeschirr wird häufig in der Natur liegengelassen, sodass es mit der Zeit zu einer Ansammlung von biologisch nicht abgebauten Abfällen kommt.

Zu unterscheiden von der biologischen Abbaubarkeit ist die Rezyklierbarkeit eines Produkts. Heutige Bemühungen gehen in die Richtung, Kunststoffe so zu modifizieren, dass diese z.B. durch in der Natur vorkommende Bakterien und/oder durch Sonnenlicht abgebaut werden können. Diese Bemühungen konzentrieren sich also praktisch ausschliesslich auf das Problem der biologischen Abbaubarkeit von Stoffen. An eine Rezyklierung der Produkte ist nicht gedacht. Gerade bei Einmalgeschirr und wegwerfbaren Verpackungen für Lebensmittel wäre aber besonders vorteilhaft, wenn diese nicht nur biologisch abbaubar wären, sondern auch rezykliert werden könnten. So könnten die in den sogenannten "Fast-Food"-Ketten anfallenden Verpackungen weitgehend wiederverwertet werden.

Aufgabe der vorliegenden Erfindung ist es, ein Laminat zur Verfügung zu stellen, welches die eingangs erwähnten Nachteile nicht aufweist. Das Laminat sollte insbesondere rezyklier- und biologisch abbaubar, sowie fett-, hitze- und tiefkühlbeständig und wenn möglich dampf- und wasserabstossend sein, sodass daraus z.B. Behälter zum Tiefkühlen, Erwärmen, Braten und Backen von Lebensmitteln hergestellt werden können.

Der Gegenstand der Erfindung wird in den Ansprüchen 1 bis 9 definiert. Das erfindungsgemäße Laminat, welches im wesentlichen aus Zellstoff besteht, ist sowohl biologisch abbaubar als auch voll rezyklierbar. Ausserdem können Lebensmittel in aus dem erfindungsgemässen Laminat hergestellten Behältern gelagert, tiefgefroren und/oder erwärmt bzw. gebacken und gebraten werden. Das Erhitzen der Lebensmittel kann dabei in konventionellen elektrischen Oefen oder in Mikrowellenöfen erfolgen. Besonders kostengünstig lässt sich das erfindungsgemässe Laminat herstellen, wenn ein silikonisiertes Backpapier mit einer Hitzebeständigkeit von > 300 °C und einer Fettbeständigkeit von ≥ 10 Linden mit einer Trägerschicht aus Karton verleimt wird.

Die volle Rezyklierbarkeit des Laminats ergibt sich daraus, dass dieses praktisch nur aus Zellstoff besteht. Das Laminat kann daher - im Unterschied zu den eingangs beschriebenen Behältern - wie Altpapier rezykliert werden. Ebenso wichtig erscheint jedoch, dass das aus Zellstoff bestehende Laminat in der Natur vollständig biologisch abbaubar ist. Unter biologischer Abbaubarkeit wird verstanden, dass ein Material, welches mit normalem Haushaltsabfall unter normalen Kompostierbedingungen vermischt wird, innerhalb von 6 Wochen verschwindet (DIN-Norm).

Die im wesentlichen aus Zellstoff bestehende fett- und hitzebständige Papierschicht wird zweckmässigerweise durch intensives mechanisches Raffinieren der Pulpe hergestellt. In diesem Herstellungsprozess wird die Oberfläche der Fasern so stark vergrössert, dass ein besonders feinporiges Papier entsteht, welches für Fettmoleküle praktisch undurchlässig ist. Die durchschnittliche Porosität des Papiers ist also geringer als die Grösse der Fettmoleküle. Die Fettbeständigkeit kann anhand des Linden-Tests gemessen werden. Ein Linden gibt die Zeit in Sekunden an, welche ein Luftvolumen von 0.318 Kubikzentimeter benötigt, um eine Papieroberfläche von 37 cm² zu durchdringen. Die Luft steht dabei unter einem Luftdruck von 100 mm Hg, besitzt eine Temperatur von 20 ^{o}C und einen Feuchtigkeitsgehalt von 65%. Zweckmässigerweise besitzt die Papierschicht eine Fettbeständigkeit von mehr als 6 Sekunden oder Linden, vorzugsweise > 8 Sekunden (Linden) und ganz besonders bevorzugt > ungefähr 10 Sekunden (Linden)

Die Hitzebeständigkeit eines Papiers kann indirekt durch Messen der Berstfestigkeit festgestellt werden. Dabei wird die Berstfestigkeit bestimmt, nachdem das Papier während einer bestimmten Zeit bei einer bestimmten erhöhten Temperatur belassen wurde. Vorteilhaft besitzt ein gebleichtes Backpapier der Stärke 41 g/m² (silikonisiert mit 0.5 g Silikon/m²) folgende Berstfestigkeit (in kPa) in Abhängigkeit von der Temperatur:

| Zeit (in min) | Temperatur ( in °C) | Berstfestigkeit (in kPa) |
|---|---|---|
| 6 | 200 | >122 |
| 6 | 210 | >115 |
| 6 | 225 | >95 |
| 6 | 230 | >90 |
| 6 | 245 | >88 |

Das gleiche Backpapier wie oben, aber ungebleicht, weist folgende Berstfestigkeiten auf:

| Zeit (in min) | Temperatur ( in °C) | Berstfestigkeit (in kPa) |
|---|---|---|
| 6 | 200 | >130 |
| 6 | 210 | >120 |
| 6 | 225 | >110 |
| 6 | 230 | >100 |
| 6 | 245 | >93 |

Zweckmässigerweise ist die Trägerschicht aus Karton, gestrichen (z.B. mit Kaolin, BaCO₃, BaS O₄ etc.) oder rauh, Papier oder einem mehrschichtigen Papier gebildet. Ein erfindungsgemässes Laminat kann kostengünstig durch Verleimen von Rollen aus Karton und fett- und hitzebeständigem Backpapier, hergestellt werden. Als Adhäsiv kann beispielsweise Stärke verwendet werden. Denkbar sind aber auch andere, vorzugsweise abbaubare (umweltfreundliche) und lebensmittelkonforme Adhäsive. Die Herstellungskosten sind also in der Praxis äusserst günstig. Die Trägerschicht des erfindungsgemässen Laminats kann auch wenigstens teilweise aus bereits rezykliertem Papier bestehen, kann also kostengünstig zur Verfügung gestellt werden. Das erfindungsgemässe Laminat hat auch den Vorteil, dass die Karton- oder die Papierschicht bedruckt werden kann.

Beim erfindungsgemässen Laminat bestimmt die Kartonschicht, die auch aus einem dicken Papier bestehen kann, weitgehend die mechanischen Eigenschaften, insbesondere die Steife des Behälters. Die für die Festigkeit sorgende Karton- oder Papierschicht kann ihrerseits aus mehreren Schichten aufgebaut sein. Es ist aber auch denkbar, dass in Fällen, wo das Laminat besonderen Verpackungszwecken dient, die Trägerschicht und die hitze- und fettbeständige Schicht ungefähr gleich dick sind. Die auf der Kartonschicht angeordnete fett- und hitzebeständige Papierschicht sorgt für die Fett- und Hitzebeständigkeit und die Lebensmittelverträglichkeit.

Vorteilhaft ist das Adhäsiv Stärke. Stärke ist lebensmittelkonform, besitzt eine gute Adhäsion an Papier oder Karton und ist weitgehend hitzebeständig. Ausserdem ist Stärke ebenfalls biologisch abbaubar. Der Behälter kann also praktisch vollständig aus natürlichen Ausgangsstoffen hergestellt sein. Es können jedoch auch andere Klebstoffe als Stärke oder künstliche, vorzugsweise biologisch abbaubare, Klebstoffe verwendet werden. Vorteilhaft sind die eingesetzten Adhäsive oder Leime abbaubar oder löslich und beeinträchtigen die Rezyklierung des Laminats nicht.

In einer besonders vorteilhaften Ausführungsform ist die Karton- respektive die dicke Papierschicht (= Trägerschicht) beidseitig mit hitze- und fettbeständigem Papier versehen.

Dies hat den Vorteil, dass eine Verfärbung oder Verkohlung des Kartons im heissen Ofen weitgehend verhindert werden kann. Es ist jedoch auch denkbar, dass die Kartonschicht auf der einen Seite mit dem fett- und hitzebeständigem Papier und auf der anderen Seite mit gewöhnlichem Papier versehen ist. Vorzugsweise ist die Papierschicht zusätzlich wasser- und sauerstoffundurchlässig. Dadurch kann das Aroma der im Behälter aufbewahrten und später erhitzten Lebensmittel erhalten werden.

Das Backpapier besitzt eine Silikonbeschichtung. Die Silikonbeschichtung resp. Silikonisierung der Papierschicht wird beispielsweise durch Auftragen von 0.3. bis 1g Silikon/m², vorzugsweise ungefähr 0.5g Silikon/m², hergestellt. Die Silikonschicht dient einerseits als Antihaftbeschichtung, verbessert also die "release"-Eigenschaften", und erhöht auch die Entzündungstemperatur. Das silikonisierte Backpapier, besitzt zweckmässigerweise eine Fettbeständigkeit von >ca. 10 Linden. Die Beschichtung hat den Vorteil, dass diese wasserabweisend ist und ein Festkleben der Lebensmittel am Papier verhindern kann. Nebenbei wird durch die Silikonisierung auch die Entzündungstemperatur der Papierschicht erhöht. Ein solchermassen beschichtetes Laminat eignet sich überraschenderweise hervorragend für Frischbackwaren, die im tiefgefrorenen Zustand gekauft bei mehr als 200 °C im Backofen direkt erwärmt werden. Die Behälter aus dem erfindungsgemässen Laminat können aufgrund der hohen Hitzebständigkeit und der überraschend guten Fettbeständigkeit sogar mehrfach eingesetzt werden.

Die Schutzschicht kann z.B. aus einer wasserlöslichen Suspension hergestellt sein. Vorteilhaft enthält die Schutzschicht einen Pigmentfarbstoff. Mit Hilfe dieses Farbstoffs kann eine mögliche Verfärbung des Papiers oder des Kartons im heissem Ofen optisch weitgehend unsichtbar gemacht werden.

Die Trägerschicht und die hitze- und fettbeständige Papierschicht können je nach Verwendungszweck unterschiedliche Stärken aufweisen. Ueblicherweise werden die Stärken so gewählt, dass sich in geeigneten Maschinen formstabile Behälter sowie Verpackungen jeder Art (Beutel, Säcke, Tüten usw.) herstellen lassen.

Aus dem oben beschriebenen Laminat lässt sich auch rezyklierbares und biologisch abbaubares Einmalgeschirr für den Gebrauch in elektrischen und/oder Mikrowellenöfen herstellen.

Nachfolgend werden Ausführungsbeispiele der Erfindung unter Bezugnahme auf die Figuren beschrieben.

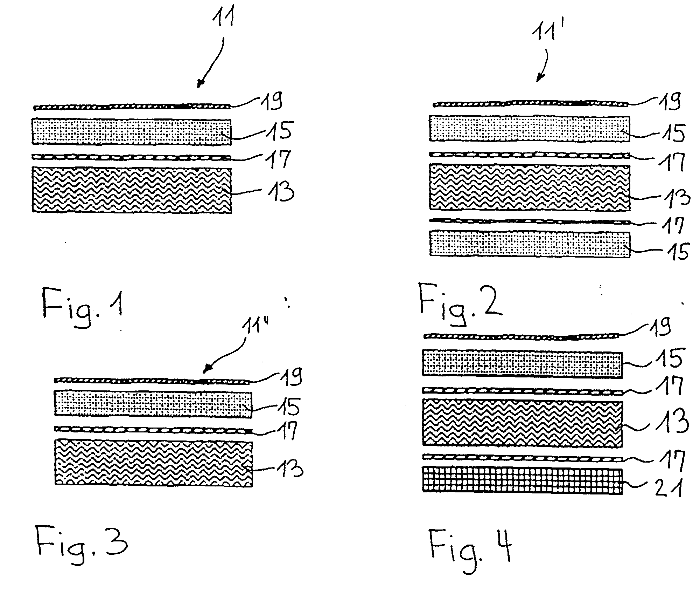

Die Laminate 11,11',11'' der Figuren 1 bis 3 bestehen aus einer Karton- oder Trägerschicht 13 und einer oder zwei Papierschichten 15 (Fig. 1 resp. Fig. 2). Die Trägerschicht 13 und die fett- und hitzebeständige Papierschichten 15 sind durch ein Adhäsiv, z.B. Stärke, in den Figuren als dazwischenliegende Leimschicht 17 dargestellt, fest miteinander verbunden. Dabei sorgt die Trägerschicht 13 für die nötige Stabilität und die Papierschicht 15 für die Fett- und Hitzebeständigkeit und Wasserabstossung oder Wasserundurchlässigkeit. Die Laminate der Figuren 1, 2 und 3 weisten eine Silikonschicht 19 auf. Die Figuren 1 bis 3 stellen keine masstäbliche Darstellung der Schichten dar. So können z.B. die Leimschicht 17 und die Silikonschicht 19 im Vergleich mit den übrigen wesentlich dünner sein.

Das Ausführungsbeispiel gemäss Figur 4 unterscheidet sich vom Ausführungsbeispiel gemäss Figur 2 darin, dass auf der einen Seite anstelle der fett- und hitzebeständigen Papierschicht eine gewöhnliche Papierschicht 21 angeordnet ist. Weitere Kombinationen von Träger- und Papierschichten sind denkbar.

Das erfindungsgemässe rezyklierbare Laminat wird vorzugsweise hergestellt, indem Rollen aus Karton und Papier mit den oben erwähnten Eigenschaften miteinander verklebt werden. Dazu wird beispielsweise die Kartonrolle zuerst mit Leim, z.B. Stärke, beschichtet. Dann wird die Papierrolle auf die Kartonrolle gepresst. Die Herstellung von Behältern kann mittels entsprechenden Formen auf bekannten Maschinen erfolgen. Eine besonders kostengünstige Variante ist, kommerziell erhältliches, silikonisiertes Backpapier auf wenigstens einer Seite der Karton-Trägerschicht aufzubringen.

Papiere, welche sich für die Herstellung der erfindungsgemässen Verpackung eignen, sind auf dem Markt erhältliche Backpapiere, welche durch mechanische Raffinierung von Zellfasern erhalten werden und mit einer Silikonschicht versehen sind. Die Papiere können aus reinem (z.B. Sulfat-)Zellstoff oder Zellulosefasern hergestellt sein und in verschiedenen Qualitäten eingesetzt werden. Die Papiere können gebleicht oder auch ungebleicht sein.

Besonders geeignet ist ein mit ungefähr 0.5 g/m² Silikon beschichtetes Backpapier mit einer Entzündungstemperatur von > ungefähr 260 °C, vorzugsweise > ungefähr 280 °C. Die Entzündungstemperatur wird gemessen, indem ein Papierstück von ungefähr 0.01 m² auf eine nicht brennbare Unterlage in einem Ofen gelegt wird, welcher mit einer Rate von 5 °C/Minute während 90 Minuten aufgeheizt wird. Dies entspricht einem Temperaturanstieg von 450 °C.

Aus dem Laminat können kostengünstig Lebensmittelbehälter, Tassen, Becher, Geschirr, ofenbeständige Schalen, Backformen und Mikrowellengeschirr beispielsweise durch Formstanzen oder Hohlprägen hergestellt werden. Das hergestellte Geschirr ist biologisch abbaubar und rezyklierbar.

## Patentansprüche

1. Rezyklierbares und biologisch abbaubares, fett-, hitze- und tiefkühlbeständiges Laminat (11), insbesondere zur Aufbewahrung, zum Aufwärmen und/oder zum Backen von Lebensmitteln, mit einer ersten Schicht oder Trägerschicht (13) aus Karton, hergestellt aus mechanisch zerkleinerter Pulpe, einem ein- oder mehrlagigen Papier, Zellstoff oder Sekundärfasern, und wenigstens einer zweiten Schicht (15) aus einem lebensmittelkonformen, fettbeständigen Papier, sowie einem Adhäsiv (17) zur Verbindung der ersten und der zweiten Schicht, **dadurch gekennzeichnet**, dass die zweite Schicht (15) ein im wesentlichen aus Zellulosefasern gebildetes Backpapier (15) mit einer als Antihaftschicht dienenden Schutzschicht (19) aus Silikon ist.

2. Laminat nach Anspruch 1, dadurch gekennzeichnet, dass die silikonisierte Papierschicht (15) eine Fettbeständigkeit von mehr als 6 Sekunden nach der Methode von Linden, vorzugsweise > 8 Sekunden (Linden) und ganz besonders bevorzugt > ungefähr 10 Sekunden (Linden) und eine Entzündungstemperatur von > ungefähr 260 °C, vorzugsweise > ungefähr 280 °C aufweist.

3. Laminat nach einem der Ansprüche 1 oder 2, dadurch gekennzeichnet, dass das eingesetzte Adhäsiv (17) lebensmittelkonform und umweltfreundlich, beispielsweise Stärke, ist.

4. Laminat nach einem der Ansprüche 1 bis 3, dadurch gekennzeichnet, dass die Kartonschicht (13) beidseitig mit fett- und hitzebeständigem Papier (15) versehen ist.

5. Laminat nach einem der Ansprüche 1 bis 4, dadurch gekennzeichnet, dass die Kartonschicht (13) auf der einen Seite mit dem fett- und hitzebeständigem Papier (15) und auf der anderen Seite mit gewöhnlichem Papier (21) versehen ist.

6. Laminat nach einem der Ansprüche 1 bis 5, dadurch gekennzeichnet, dass die zweite Schicht (15) wasserabstossend- und sauerstoffundurchlässig ist.

7. Laminat nach einem der Ansprüche 1 bis 6, dadurch gekennzeichnet, dass die Schutzschicht (19) einen Pigmentfarbstoff enthält.

8. Laminat nach einem der Ansprüche 1 bis 7, dadurch gekennzeichnet, dass als Papierschicht (15) ein silikonisiertes Backpapier einer Stärke von 38 - 42 g/m² verwendet wird, welches eine Fettbeständigkeit besitzt von ≥ 10 Linden und eine Berstfestigkeit von > 88 kPa, wenn das Papier während 6 Minuten bei einer Temperatur von 245 °C belassen wird.

9. Behälter zum Aufbewahren, Tiefgefrieren und/oder Erhitzen von Lebensmitteln in konventionellen und in Mikrowellenöfen herstellbar aus dem Laminat (11) gemäss den Ansprüchen 1 bis 8.

## Claims

1. Laminate (11) recyclable and biodegradable, greaseproof, heat and deep freeze resistant, particularly for storage, heating and/or baking of foodstuffs, with a first layer or support ayer (13) of board, produced with mechanically ground pulp, one ply or multiply paper, pulp or secondary fibres, and at least a second layer (15) of an alimentary suitable, greaseproof paper, as well as an adhesive (17) for binding the first and the second layer, characterised by the fact that the second layer (15) is essentially a baking paper (15) of pulp fibres with a protective silicone layer serving as anti-sticking layer (19).

2. Laminate according to claim 1, characterised by the fact that the siliconised paper layer (15) shows a greaseproofness of over 6 seconds according to Linden method, better >8 seconds (Linden) and particularly preferably of > ca. 10 seconds (Linden) and an ignition temperature of > ca. 260°C, preferably > ca. 280°C.

3. Laminate in accordance with the claims 1 or 2, characterised b y the fact that the adhesive (17) is suitable for foodstuffs and environmentally friendly, for instance starch.

4. Laminate according to one of the claims 1 to 3, characterised by the fact that the board layer (13) is coated on both sides with greaseproof and heat resistant paper (15).

5. Laminate according to one of the claims 1 to 4, characterised by the fact that the board layer (13) is coated on one side with greaseproof and heat resisting paper (15) and on the other side with plain paper (21).

6. Laminate according to one of the claims 1 to 5, characterised by the fact that the second layer (15) is water repellent and impermeable to oxygen.

7. Laminate according to one of the claims 1 to 6, characterised by the fact that the protection layer (19) contains a colour pigment.

8. Laminate according to one of the claims 1 to 7, characterised by the fact that as paper layer (15) is used a siliconised baking paper of 38 - 42 g/m², with a greaseproofness of ≥ 10 Linden and a burst strength of > 88 kPa, if the paper is left for 6 minutes at a temperature of 245°C.

9. Containers for storage, deep freezing and/or heating of foodstuffs in conventional electric and microwave ovens, made of the laminate (11) according to the claims 1 to 9.

## Revendications

1. Produit laminé (11) recyclable et biodégradable, résistant à la graisse, à la chaleur et à la surgélation, particulièrement apte à la conservation, le chauffage et/ou cuisson au four d'aliments, avec une première couche ou couche de support (13) de carton produit avec de la cellulose défibrée mécaniquement, de papier à une couche ou à plusieurs couches, cellulose ou fibres secondaires, et au moins une deuxième couche (15) de papier alimentaire, résistant à al graisse, ainsi qu'un adhésif (17) pour le collage de la première et de la deuxième couche, caractérisé par le fait que la deuxième couche (15) consiste de papier à four (15) fait essentiellement de fibres de cellulose, enduit de silicone servant de couche de protection anti-adhérante (19).

2. Produit laminé selon revendication 1, caractérisé par le fait que la couche de papier siliconé (15) présente une résistance à la graisse de plus de 6 secondes selon la méthode Linden, préférablement > 8 secondes (Linden) ou encore plus plus avantageux > env. 10 secondes (Linden) et une température d'allumage d'env. > 260°C, préférablement > env.280°C.

3. Produit laminé conforme aux revendications 1 ou 2, caractérisé par le fait que l'adhésif (17) est alimentaire et écologique, par exemple l'amidon.

4. Produit laminé conforme à l'une des revendications 1 à 3, caractérisé par le fait que la couche en carton (13) est revêtue sur les deux cotés de papier (15) résistant à la graisse et à la chaleur.

5. Produit laminé conforme à l'une des revendications 1 à 4, caractérisé par le fait que la couche de carton (13) est revêtue sur un coté de papier (15) résistant à la graisse et à la chaleur et sur l'autre coté de papier commun (21).

6. Produit laminé conforme à l'une des revendications 1 à 5, caractérisé par le fait que la deuxième couche (15) est hydrofuge et imperméable à l'oxygène.

7. Produit laminé conforme à l'une des revendications 1 à 6, caractérisé par le fait que la couche de protection (19) contient un pigment coloré.

8. Produit laminé conforme à l'une des revendication 1 à 7, caractérisé par le fait que comme couche de papier (15) on utilise un papier à four siliconé en grammage 38 - 42 g/m2, ayant une résistance à la chaleur de >-10 Linden et une résistance à l'éclatement de > 88kPa, si le papier est laissé pour 6 minutes à une température de 245°C.

9. Emballages pour la conservation, surgélation et/ou chauffage d'aliments au four électrique traditionnel et au four microonde, faits avec le produit laminé (11) conforme aux revendications 1 à 8.
